Europäisches Patentamt

European Patent Office

Office européen des brevets

(19)

(11) Veröffentlichungsnummer: **0 288 952 B1**

# (12) EUROPÄISCHE PATENTSCHRIFT

(45) Veröffentlichungstag der Patentschrift: **19.11.92**

(21) Anmeldenummer: **88106577.5**

(22) Anmeldetag: **25.04.88**

(51) Int. Cl.⁵: **G01P 3/66**

(54) Verfahren und Vorrichtung zur Messung der Geschwindigkeit von Fahrzeugen.

(30) Priorität: **28.04.87 CH 1608/87**

(43) Veröffentlichungstag der Anmeldung:
**02.11.88 Patentblatt 88/44**

(45) Bekanntmachung des Hinweises auf die
Patenterteilung:
**19.11.92 Patentblatt 92/47**

(84) Benannte Vertragsstaaten:
**AT DE FR NL**

(56) Entgegenhaltungen:
**GB-A- 1 456 690**
**US-A- 3 825 734**
**US-A- 4 368 428**

**PATENT ABSTRACTS OF JAPAN, Band 9, Nr. 122 (P-359)[1845], 28. Mai 1985; & JP-A-60 7364 (KIYOUWA DENGIYOU K.K.) 16-01-1985**

**JOURNAL A, Band 21, Nr. 3, Juli 1980, Seiten 104-111, Antwerpen, BE; J.L. DE KROES et al.: "Precise measurements of speed and length of vehicles using induction loops: the trapezium method"**

(73) Patentinhaber: **ZELLWEGER USTER AG**
**Wilstrasse 11**
**CH-8610 Uster(CH)**

(72) Erfinder: **Goede, Simon**
**Höhenstrasse 27**
**CH-8620 Wetzikon(CH)**

## Beschreibung

Die Erfindung betrifft ein Verfahren zur Messung der Geschwindigkeit von Fahrzeugen mit einem Paar von quer zur Fahrtrichtung in die Fahrbahn eingelassenen druckempfindlichen Detektorkabeln, welche unter Einwirkung eines mechanischen Impulses Signale abgeben, aus denen die Fahrzeit des jeweiligen Fahrzeugs für die durch die Detektorkabel begrenzte Strecke ermittelt wird.

Bei einem in der DE-A-30 25 774 beschriebenen Verfahren dieser Art sind die Detektorkabel über die Fahrbahn gespannt und dadurch äusseren Einflüssen und insbesondere Abnützung stark ausgesetzt. Dadurch verursachte und von aussen nicht erkennbare Defekte können unzulässige Fehlmessungen verursachen. Diese können auch durch Fremdkörper, beispielsweise durch hochgeschleuderte Steine, ausgelöst werden. Es ist in dieser Druckschrift zwar erwähnt, dass die Detektorkabel unter der Fahrbahnoberfläche installiert werden können, die dabei entstehenden Probleme, wie schwächere und längere Impulse beim Passieren eines Fahrzeugs und Erschwerung der Ableitung von zeitsignifikanten Signalen aus diesen Impulsen, sind jedoch nicht erwähnt und es werden auch keine Massnahmen zur Lösung dieser Probleme angegeben.

Bei einem in der EP-B-42 546 beschriebenen Messystem sind in Fahrtrichtung hintereinander drei Lichtschranken angeordnet, welche zwei Messbasen begrenzen. Der Absolutwert der Differenz der über beide Messbasen gemessenen Zeitintervalle wird mit einem Bruchteil eines der beiden Zeitintervalle verglichen und die Ausgabe eines Messwerts wird vom Ergebnis dieses Vergleichs abhängig gemacht.

Eine Kombination dieses Systems mit dem in der DE-A-30 25 774 beschriebenen Verfahren, das heisst die Verwendung von drei zwei Messbasen begrenzenden Detektorkabeln und der Vergleich der Messwerte von beiden Messbasen, würde die im Zusammenhang mit der DE-A-30 25 774 erwähnten Fehlermöglichkeiten nahezu ausschliessen. Denn sowohl Defekte an den Detektorkabeln als auch durch hochgeschleuderte Steine verursachte Fehlmessungen würden kaum gemeinsam in beiden Messbasen auftreten und wären somit mit hoher Wahrscheinlichkeit erkennbar. Der durch das Verlegen eines dritten Detektorkabels bedingte Mehraufwand ist jedoch beträchtlich.

Durch die Erfindung soll nun das eingangs genannte Verfahren so verbessert werden, dass mit minimalem Aufwand ein praktisch fehler- und verschleissfreies Messystem mit Detektorkabeln realisiert werden kann.

Diese Aufgabe wird erfindungsgemäss dadurch gelöst, dass aus den beim Ueberfahren jedes Detektorkabels durch jede Achse eines Fahrzeugs ausgelösten Signalen die Fahrzeiten der einzelnen Achsen für die genannte Strecke bestimmt und somit bei einem n-achsigen Fahrzeug n Zeitintervalle ermittelt und für die Geschwindigkeitsmessung ausgewertet werden, dass die relative gegenseitige Abweichung dieser Zeitintervalle bestimmt und mit einem vorgegebenen Toleranzwert verglichen wird, und dass die Messung nur dann ausgewertet wird, wenn die Abweichung nicht grösser ist als der Toleranzwert, wobei die Bestimmung der Geschwindigkeit anhand der Zeitintervalle, vorzugsweise anhand von deren Durchschnittswert und des Abstands zwischen den Detektorkabeln.

Durch die erfindungsgemässe Messung der Fahrzeit der einzelnen Achsen eines Fahrzeugs ergibt sich der überraschende und vorteilhafte Effekt, dass mit bloss zwei Detektorkabeln, die nur eine Messbasis begrenzen, bei beispielsweise zweiachsigen Fahrzeugen zwei Zeitintervalle erhalten werden, deren Vergleich eine Ausschaltung der erwähnten Fehlerquellen ermöglicht. Damit hat man die Vorteile des aus der EP-B-42 546 bekannten Systems mit den beiden Messbasen, ohne dass jedoch die Verlegung eines dritten Detektorkabels erforderlich wäre.

Die Erfindung betrifft weiter eine Vorrichtung zur Durchführung des genannten Verfahrens, mit zwei beabstandet in die Fahrbahn eingelassenen Detektorkabeln und mit einer Einrichtung zur Verarbeitung der von den Detektorkabeln erzeugten Signale.

Die erfindungesgemässe Vorrichtung ist dadurch gekennzeichnet, dass die genannte Einrichtung Mittel zur Bestimmung des von jeder Achse des Fahrzeugs für die Strecke zwischen den Detektorkabeln benötigten Zeitintervalls, Mittel zur Bestimmung der relativen gegenseitigen Abweichung dieser Zeitintervalle, Mittel zum Vergleich der genannten Abweichung mit einem Toleranzwert und Mittel zur Bestimmung der Geschwindigkeit anhand der Zeitintervalle, vorzugsweise anhand von deren Durchschnittswert und des Abstands zwischen den Detektorkabeln enthält.

Nachstehend wird die Erfindung anhand eines Ausführungsbeispiels und der Zeichnungen näher erläutert; dabei zeigt:

Fig. 1 eine schematische Darstellung einer erfindungsgemässen Vorrichtung mit zwei in einer Fahrbahn verlegten Detektorkabeln,

Fig. 2 ein Detail von Fig. 1; und

Fig. 3 bis 6 Diagramme zur Funktionserläuterung.

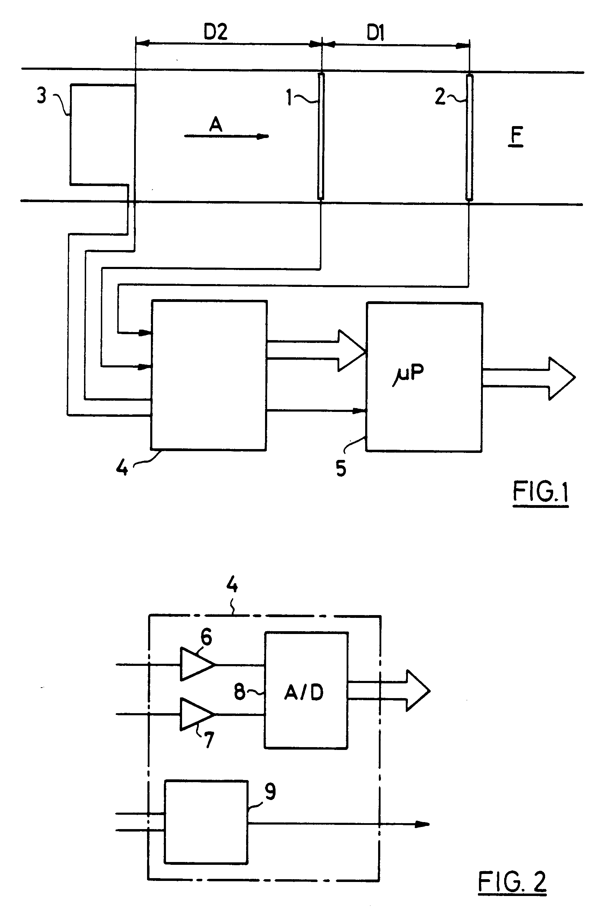

In Fig. 1 ist eine Fahrbahn F angedeutet, welche in Richtung des Pfeiles A von Fahrzeugen befahren wird. Quer zur Fahrtrichtung A und über die ganze Breite sind in die Fahrbahn F in einem genau bekannten gegenseitigen Abstand D1 zwei druckempfindliche Detektorkabel 1 und 2 eingelassen. Diese Kabel sind beispielsweise Koaxialkabel mit einer piezoelektrischen Komponente, wie sie unter der Bezeichnung "Mikrophonkabel" in der Sicherheitstechnik zur Detektion von einen mit einem derartigen Kabel gesicherten Zaun übersteigenden Eindringlingen verwendet werden. Derartige Kabel erzeugen bei einer Deformation eine Spannung an ihren Anschlussklemmen.

Von diesem Kabel werden zwei Stück 1 und 2 quer zur Fahrbahnachse in die zu überwachende Fahrbahn F verlegt, und zwar parallel zu einander und im bekannten Abstand D1. Wenn ein Fahrzeug die Fahrbahn F über einem der Kabel 1, 2 passiert, dann erzeugt das betreffende Kabel bei der Ueberfahrt jedes Rades oder Radpaares bei einspurigen bzw. mehrspurigen Fahrzeugen, oder anders gesagt, bei der Ueberfahrt jeder Achse, einen Spannungsimpuls. Dabei ist die Form dieses Spannungsimpulses unter anderem von folgenden Faktoren abhängig:

- Achslast der jeweiligen Fahrzeugachse
- Beschaffenheit und Temperatur des Strassenbelags
- Beschaffenheit, Temperatur und Verlegungstiefe des Detektorkabels.

Neben der Detektorkabeln 1 und 2, ist in der Fahrbahn F, beispielsweise in einer Distanz D2 vor dem in Fahrtrichtung A ersten Detektorkabel 1, eine Induktionsschleife 3 verlegt. Diese besteht aus einem in einer Schleife mit einer oder mit mehreren Windungen in die Fahrbahn F eingelassenen Drahtstück. Da sich durch die Stahlmasse eines die Induktionsschleife 3 überfahrenden Fahrzeugs deren Selbstinduktion für die Dauer der Ueberfahrt markant ändert, kann die Induktionsschleife 3 zur Detektion der Präsenz eines Fahrzeugs verwendet und in die Auswertung der Signale der Detektorkabel 1, 2 einbezogen werden. Dies einerseits im Sinn einer Ueberprüfung, ob nämlich unmittelbar vor einem Ueberfahrtsignal der Detektorkabel 1, 2 die Induktionsschleife 3 ein Fahrzeug detektiert hat, und anderseits zur Unterscheidung einzelner Fahrzeugarten, wie beispielsweise Personen- und Lastkraftwagen.

Die Detektorkabel 1, 2 und die Induktionsschleife 3 sind mit einer Auswerteschaltung 4 für die Auswertung der bei Ueberfahrt eines Fahrzeugs von den Detektorkabeln 1, 2 gelieferten Spannungsimpulse und der in der Induktionsschleife 3 erzeugten Induktivitätsänderungen verbunden. Die Auswerteschaltung 4 ist mit einer Mikroprozessorschaltung 5 verbunden, welche die von der Auswerteschaltung 4 gelieferten Signale und Daten verarbeitet und daraus Geschwindigkeit und Länge der erfassten Fahrzeuge bestimmt.

Die Auswerteschaltung 4 hat die Aufgabe, die von den Detektorkabeln 1, 2 gelieferten Impulse und die Induktivitätsänderungen der Induktionsschleife 3 in eine solche Form zu bringen, dass deren genaue Verarbeitung durch den Mikroprozessor möglich ist. Somit ist die Auswerteschaltung 4 das Bindeglied zwischen den Detektoren 1, 2 und 3 und dem Mikroprozessor 5.

Wie Fig. 2 zu entnehmen ist, enthält die Auswerteschaltung 4 im wesentlichen zwei Verstärker 6, 7, einen A/D-Wandler 8 und einen Schleifendetekor 9. Die Verstärker 6, 7, an deren Eingänge die Ausgänge der Detektionskabel 1, 2 geführt sind, sind an die Eingänge des A/D-Wandlers 8 angeschlossen. Dieser ist schnell und hochauflösend und weist einen Eingangsmultiplexer auf. Die weitere Auswertung der Ausgangssignale des A/D-Wandlers 8 erfolgt in digitaler Form in der Mikroprozessorschaltung 5.

Der Schleifendetektor 9, an welchen die beiden Enden der Induktionsschleife 3 geführt sind, ist so ausgelegt, dass die Induktionsschleife 3 als induktiver Teil eines Resonanzkreises geschaltet ist. Dadurch kann der Schleifendetektor 9 eine durch die Ueberfahrt eines Fahrzeuges hervorgerufene Induktivitätsänderung, die sich als Aenderung der Eigenfrequenz dieses Resonanzkreises auswirkt, einfach erkennen. Im Ruhezustand, d.h. wenn kein Fahrzeug die Induktionsschleife 3 passiert, ist der Ausgang des Schleifendetektors 9 auf logisch "0" und wechselt nur während der Ueberfahrt eines Fahrzeugs auf logisch "1". Derartige Geräte sind im Handel erhältlich, so dass der Schleifendetektor 9 hier nicht näher beschrieben wird.

Die Mikroprozessorschaltung 5 ist von üblicher Bauart und besteht aus einer Zentralen Steuereinheit, einem Festwertspeicher (Programmspeicher), einem Schreib/-Lese-Speicher, aus Zählerbausteinen und aus Ein/Ausgabe-Einheiten. Nähere Angaben können den Datenbüchern der μP-Hersteller entnommen werden.

Die Zentrale Steuereinheit steuert die Eingabeeinheiten, liest die an diesen anliegenden Daten ein, verarbeitet diese und gibt sie an die Ausgabeeinheiten ab, wobei alle diese Funktionen anhand der im Programmspeicher enthaltenen Instruktionen ablaufen. Die bei Berechnungen entstehenden Zwischenresultate werden im Schreib/Lese-Speicher zwischengespeichert und bei Bedarf wieder abgerufen. Die Zählerbausteine dienen zur Messung von Zeitintervallen, deren Werte von der Zentralen Steuereinheit direkt eingelesen werden.

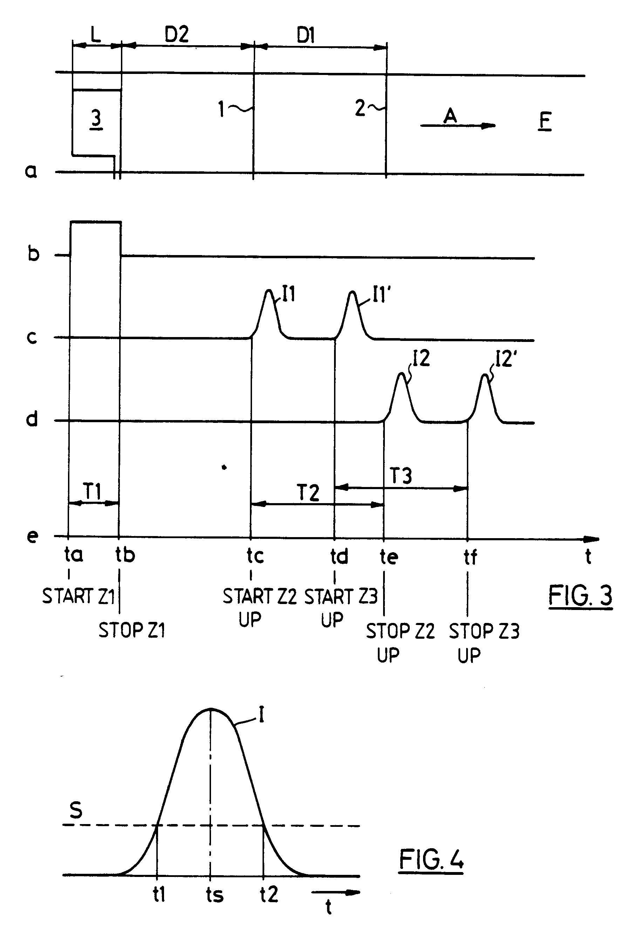

Die im Programmspeicher enthaltenen Instruktionen bilden ein in Form eines digitalen Codes gespeichertes Messprogramm, welches nun anhand von Fig. 3 beschrieben wird. In Fig. 3 ist in Zeile a schematisch eine Fahrbahn F mit einer Geschwindigkeitsmessvorrichtung dargestellt (vergleiche Fig. 1); in Zeile b ist das Ausgangssignal des Schleifendetektors 9 (Fig. 2) und in den Zeilen c und d das Ausgangssignal des ersten bzw. des zweiten Detektionskabels 1, 2 eingetragen. In Zeile e schliesslich sind die verschiedenen Funktionsschritte auf der Zeitachse t eingetragen.

Darstellungsgemäss läuft das Messprogramm folgendermassen ab:
Der Ausgang des Schleifendetektors 9 (Fig. 2) wird ständig auf seinen Schaltzustand überwacht. Sobald die Umschaltung von "0" auf "1" erfolgt (Zeile b), was bekanntlich bedeutet, dass ein Fahrzeug die Induktionsschleife 3 überfährt (Zeile e, Zeitpunkt ta), laufen folgende Funktionsschritte ab:

- Es wird ein Zähler Z1 gestartet (Zeile e).
- Der Ausgang des A/D-Wandlers 8 (Fig. 2) wird auf das Auftreten eines vom ersten Detektorkabel 1 gelieferten Impulses überwacht.
- Sobald am Ausgang des A/D-Wandlers 8 der erste Impuls I1 (Zeile c) des ersten Detektorkabels 1 eintrifft (Zeile e, Zeitpunkt tc), wird ein Unterprogramm UP zur Ableitung eines signifikanten Zeitpunktes gestartet. Dieses Unterprogramm wird später beschrieben. Zum selben Zeitpunkt tc wird ein Zähler Z2 gestartet (Zeile e) und der Ausgang des A/D-Wandlers 8 wird weiter auf das Auftreten von vom ersten oder zweiten Detektorkabel 1 bzw. 2 gelieferten Impulsen überwacht.
- Beim Eintreffen eines zweiten Impulses I1′- (Zeile c) vom ersten Detektorkabel 1 am Ausgang des A/D-Wandlers 8 (Zeile e, Zeitpunkt td) wird das Unterprogramm UP wiederum gestartet und gleichzeitig erfolgt der Start eines Zählers Z3.
- Beim Eintreffen eines ersten Impulses I2 (Zeile d) vom zweiten Detektorkabel 2 (Zeile e, Zeitpunkt te) wird der Zähler Z2 angehalten und die von ihm gemessene Zeit T2 eingelesen. Gleichzeitig wird das Unterprogramm UP gestartet.
- Beim Eintreffen eines zweiten Impulses I2' (Zeile d) vom zweiten Detektorkabel 2 (Zeile e, Zeitpunkt tf) wird der Zähler Z3 angehalten und die von ihm gemessene Zeit T3 eingelesen. Gleichzeitig wird wiederum das Unterprogramm UP gestartet.
- Während der bisher beschriebenen Vorgänge wird auch der Ausgang des Schleifendetektors (Zeile b) überwacht. Sobald dieser von "1" auf "0" ändert (Zeile e, Zeitpunkt tb), wird der Zähler Z1 angehalten und die von ihm gemessene Zeit T1 eingelesen.
- Die von den Zählern Z2 und Z3 gemessenen Zeitwerte T2 bzw. T3 werden durch die entsprechenden vom Unterprogramm UP bestimmten Zeiten korrigiert. Die auf diese Weise korrigierten Zeitwerte entsprechen den Zeitintervallen, innerhalb derer die ersten und zweiten Räder oder Räderpaare, oder allgemein Achsen, des betreffenden Fahrzeugs die Strecke D1 zwischen dem ersten und dem zweiten Detektorkabel 1 bzw 2 zurückgelegt haben.
- Anschliessend wird die relative Abweichung der beiden Zeitintervalle T2, T3 berechnet. Liegt diese oberhalb einer bestimmten Toleranzgrenze von beispielsweise 3%, dann darf die Messung nicht ausgewertet werden. Liegt sie darunter, dann wird der Durchschnitt aus den beiden Zeitintervallen T2 und T3 berechnet und für die Geschwindigkeitsberechnung herangezogen, welche anhand dieses Durchschnittwertes und der bekannten Distanz D1 zwischen den beiden Detektorkabeln 1 und 2 erfolgt.
- Die vom Zähler Z1 erfasste Präsenzzeit T1 des Fahrzeugs im Bereich der Induktionsschleife 3 wird nun zur Berechnung der Länge des Fahrzeugs herangezogen. Diese ergibt sich aus dem Produkt der Präsenzzeit T1 mal der berechneten Geschwindigkeit minus der wirksamen Länge L der Induktionsschleife 3. Die ermittelte Fahrzeuglänge kann beispielsweise zur Klassierung der Fahrzeuge in verschiedene Kategorien, wie PKW, LKW, verwendet werden, was bei unterschiedlichen Höchstgeschwindigkeiten für die einzelnen Kategorien und bei der Erfassung von Verkehrsdaten wichtig ist.
- Die berechneten Werte von Geschwindigkeit und Fahrzeuglänge werden an einer Ausgabeeinheit in parallelem oder seriellem Format mit einem gewünschten Ausgabeprotokoll ausgegeben. Diese Daten können zu einem Verkehrsüberwachungsgerät weitergeleitet werden, welches bei Ueberschreitung der zulässigen Höchstgeschwindigkeit eine Kamera auslöst und die gemessene Geschwindigkeit in die Aufnahme einblendet. Derartige Ueberwachungsgeräte sind bekannt, beispielsweise im Zusammenhang mit den MULTANOVA-Geräten (MULTANOVA - eingetragenes Warenzeichen der Zellweger Uster AG) der Anmelderin der vorliegenden Patentanmeldung. Die Daten können auch zur statistischen Erfassung von Verkehrsdaten verwendet werden und werden in diesem Fall einem entsprechenden Datenerfassungsgerät zugeführt.
- Nach der Ausgabe der genannten Daten aus dem µP 5 ist der laufende Messzyklus beendet. Die Vorrichtung ist für eine neue Messung bereit und beginnt wieder mit der dauernden Ueberwachung des Ausgangs des Schleifendetektors 9 (Fig. 2).

Nachfolgend wird das Unterprogramm UP zur Ableitung eines signifikanten Zeitpunktes aus einem Impulsverlauf erläutert. Dieses Unterprogramm wird gemäss Fig. 3 beim Auftreten jedes der Impulse I1,I1′,I2 und I2′ gestartet.

Wie bereits erwähnt wurde, ist die Form der von den Detektorkabeln 1, 2 gelieferten Spannungsimpulse von mehreren Faktoren abhängig, von denen einige (Temperatur, Alterung) sogar variabel sind und die in der Regel nicht für beide Detektorkabel gleich sind. Daher liefert eine einfache Schwellwertdetektion dieser Impulse keine signifikanten Zeitpunkte und ergibt daher auch keine zuverlässige Geschwindigkeitsmessung.

Im Unterschied von den nicht signifikanten Flanken eines Impulses ist im allgemeinen dessen Flächenhalbierende zeitsignifikant. Deren Bestimmung gestaltet sich relativ einfach, wenn von einer symmetrischen Impulsform (Fig. 4) ausgegangen werden kann.

Bei dem in Fig. 4 dargestellten symmetrischen Impuls I werden in der Anstiegs- und Abfall-Flanke mittels einer einfachen Schwellwertschaltung (Schwellwert S) die Zeitpunkte t1 und t2 bestimmt, zu denen die momentane Spannung einen gewissen Wert aufweist. Daraus kann der signifikante Zeitpunkt ts des Impulses I in der Mitte zwischen t1 und t2 definiert werden.

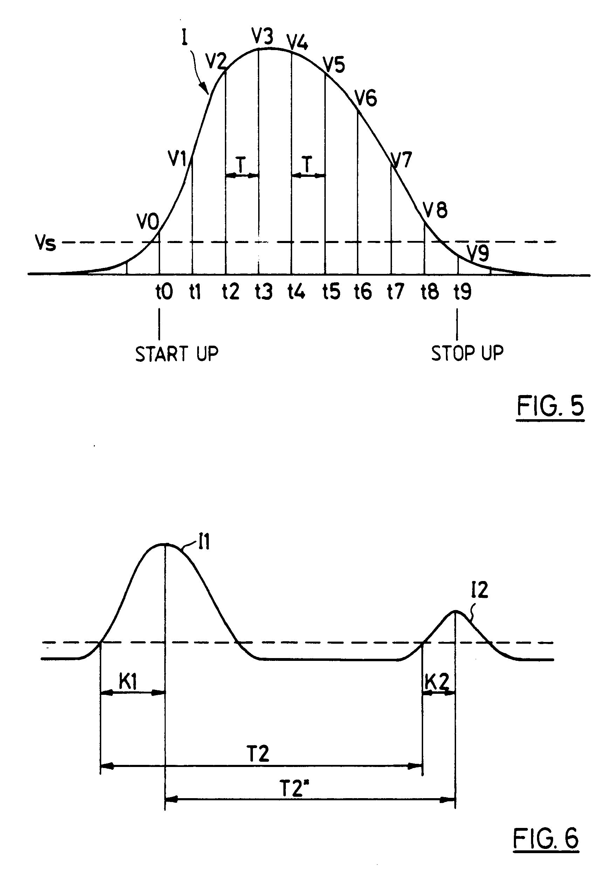

Wenn der Impulsverlauf nicht symmetrisch ist, was aufgrund der Eigenschaften des Strassenbelags angenommen werden muss, dann erfolgt die Bestimmung der Flächenhalbierenden anhand der Darstellung von Fig. 5.

Wie bei der Beschreibung von Fig. 2 erwähnt wurde, enthält die Auswerteschaltung 4 den schnellen, hochauflösenden A/D-Wandler 8. Dieser tastet den Spannungsverlauf der von den Detektorkabeln gelieferten Impulse I ab und liefert zu jedem Abtastwert einen entsprechenden Binärcode.Der µP 5 (Fig.1) wartet nach der Detektion des Beginns eines Impulses bis die Impulsspannung einen gewissen Wert Vs überschreitet und startet in diesem Moment das Unterprogramm UP. Gleichzeitig wird der betreffende Zähler gestartet oder gestoppt. Das Unterprogramm hat die Aufgabe, die Flächenhalbierende des Impulses I zu bestimmen.

Zu diesem Zweck werden im Unterprogramm UP die vom A/D-Wandler 8 (Fig. 2) gelieferten Tastwerte eingelesen und zur numerischen Integration des Spannungsverlaufs des Impulses I verwendet. Beim Unterschreiten derselben Schwelle Vs, bei deren Ueberschreiten das Unterprogramm UP und damit die Integration gestartet wurden, wird die Integration abgebrochen, d.h. das Unterprogramm wird gestoppt.

Während der Integration wird bei jedem Tastwert Vn der zugehörige Zeitwert tn und das zugehörige Integral (Summe über alle n von Vn mal T) gespeichert. Nach Abschluss der Integration wird der Gesamtwert des Integrals ( = Gesamtvolumen des Impulses) halbiert und aus allen gespeicherten Zwischenwerten des Integrals derjenige gesucht, welcher der Hälfte des Gesamtvolumens am nächsten kommt. Der diesem Zwischenwert zugehörige Zeitwert tn liefert nun den signifikanten Zeitpunkt des Impulses.

Die Zeit zwischen dem Start des Unterprogramms und dem signifikanten Zeitpunkt des Impulses wird nun als Korrekturwert für die jeweilige Zeitintervallmessung herangezogen. Diese Korrektur ist in Fig. 6 für das vom Zähler Z2 gemessene Zeitintervall T2 dargestellt, welches dem Abstand zwischen dem jeweils ersten Impuls I1 und I2 der beiden Detektorkabel 1 bzw. 2 entspricht. Darstellungsgemäss wird der Korrekturwert K1 für den ersten Impuls I1 des Detektorkabels 1 vom Zählerwert T2 subtrahiert, und der Korrekturwert K2 für den ersten Impuls I2 des Detektorkabels 2 wird zum Zählerwert T2 addiert. Auf diese Weise wird das vom Zähler gemessene Zeitintervall T2 auf das wahre Zeitintervall T2* korrigiert. Gleiches gilt für das vom Zähler Z3 für die Impulse T1′ und T2′ gemessene Zeitintervall T3 (Fig. 3).

## Patentansprüche

1. Verfahren zur Messung der Geschwindigkeit von Fahrzeugen mit einem Paar von quer zur Fahrtrichtung in die Fahrbahn eingelassenen druckempfindlichen Detektorkabeln, welche unter Einwirkung eines mechanischen Impulses Signale abgeben, aus denen die Fahrzeit des jeweiligen Fahrzeugs für die durch die Detektorkabel begrenzte Strecke ermittelt wird, dadurch gekennzeichnet, dass aus den beim Ueberfahren jedes Detektorkabels (1, 2) durch jede Achse eines Fahrzeugs ausgelösten Signalen (I1, I1', I2, I2') die Fahrzeiten (T2, T3) der einzelnen Achsen für die genannte Strecke (D1) bestimmt und somit bei einem n-achsigen Fahrzeug n Zeitintervalle ermittelt und für die Geschwindigkeitsmessung ausgewertet werden, dass die relative gegenseitige Abweichung dieser Zeitintervalle (T2, T3) bestimmt und mit einem vorgegebenen Toleranzwert verglichen wird, und dass die Messung nur dann ausgewertet wird, wenn die Abweichung nicht grösser ist als der Toleranzwert, wobei die Bestimmung der Geschwindigkeit anhand der Zeitintervalle, vorzugsweise anhand von deren Durchschnittswert und des Abstands (D1) zwischen den Detektorkabeln (1, 2) erfolgt.

2. Verfahren nach Anspruch 1, dadurch gekennzeichnet, dass im Bereich der Detektorkabel (1, 2), vorzugsweise vor dem in Fahrtrichtung

(A) ersten Detektorkabel (1), eine Induktionsschleife (3) in der Fahrbahn (F) verlegt wird, und dass die Dauer (T1) der durch ein die Induktionsschleife passierendes Fahrzeug verursachten Aenderung von deren Induktivität in Relation mit der für dieses Fahrzeug bestimmten Geschwindigkeit zur Bestimmung der Länge des betreffenden Fahrzeugs verwendet wird.

3. Verfahren nach Anspruch 1 oder 2, dadurch gekennzeichnet, dass für die von den Detektionskabeln (1, 2) gelieferten impulsförmigen Signale (I1, I1', I2, I2') ein Schwellwert (S, Vs) festgelegt wird, dass die Bestimmung der Zeitintervalle (T2, T3) beim Ueber- und Unterschreiten dieses Schwellwerts gestartet beziehungsweise beendet wird, und dass aus jedem der impulsförmigen Signale ein signifikanter Zeitpunkt für das Auftreten des jeweiligen Signals gewonnen und daraus ein Korrekturwert (K1, K2) für das gemessene Zeitintervall gewonnen wird.

4. Verfahren nach Anspruch 3, dadurch gekennzeichnet, dass für die Gewinnung des signifikanten Zeitpunkts eines Impulses (I) dessen zur Zeitachse (t) senkrechte Flächenhalbierende bestimmt und der dieser Flächenhalbierenden entsprechende Zeitpunkt (ts) als signifikant definiert wird.

5. Verfahren nach Anspruch 4, dadurch gekennzeichnet, dass der Spannungsverlauf jedes Impulses (I) getastet, jeder Tastwert (Vn) zur numerischen Integration des Spannungsverlaufs des Impulses verwendet und bei dieser Integration bei jedem Tastwert der zugehörige Zeitwert (tn) und das zugehörige Integral gespeichert wird, und dass die Flächenhalbierende aus dem Gesamtwert des Integrals bei Abschluss der Integration bestimmt wird.

6. Verfahren nach Anspruch 5, dadurch gekennzeichnet, dass der Gesamtwert des Integrals halbiert und aus den gespeicherten Zwischenwerten des Integrals der dem halbierten Gesamtwert am nächsten kommende Wert bestimmt wird, und dass der diesem Zwischenwert entsprechende Zeitwert (tn) als signifikanter Zeitpunkt verwendet wird.

7. Vorrichtung zur Durchführung des Verfahrens nach Anspruch 1, mit zwei beabstandet in die Fahrbahn eingelassenen Detektorkabeln und mit einer Einrichtung zur Verarbeitung der von den Detektorkabeln erzeugten Signale, dadurch gekennzeichnet, dass die genannte Einrichtung Mittel zur Bestimmung des von jeder Achse des Fahrzeugs für die Strecke (D1) zwischen den Detektorkabeln (1, 2) benötigten Zeitintervalls (T2, T3), Mittel zur Bestimmung der relativen gegenseitigen Abweichung dieser Zeitintervalle, Mittel zum Vergleich der genannten Abweichung mit einem Toleranzwert und Mittel zur Bestimmung der Geschwindigkeit anhand der Zeitintervalle, vorzugsweise anhand von deren Durchschnittswert und des Abstands (D1) zwischen den Detektorkabeln (1, 2) enthält.

8. Vorrichtung nach Anspruch 7, gekennzeichnet durch eine in Fahrtrichtung (A) vor dem ersten Detektorkabel (1) in die Fahrbahn (F) verlegte Induktionsschleife (3).

9. Vorrichtung nach Anspruch 8, dadurch gekennzeichnet, dass die genannte Einrichtung zur Verarbeitung der Signale aus einer Auswerte- und einer Mikroprozessorschaltung (4 bzw. 5) gebildet ist, wobei die Auswerteschaltung als Bindeglied zwischen den Detektoren (1, 2, 3) und der µP-Schaltung dient und die letztere die genannten Mittel aufweist.

10. Vorrichtung nach Anspruch 9, dadurch gekennzeichnet, dass die Auswerteschaltung (4) zwei Verstärker (6, 7) aufweist, an deren Eingang je ein Detektorkabel (1, 2) angeschlossen ist, und dass die Ausgänge der Verstärker zu einem A/D-Wandler (8) mit Eingangs-Multiplexer geführt sind.

11. Vorrichtung nach Anspruch 10, dadurch gekennzeichnet, dass die Auswerteschaltung (5) einen Schleifendetektor (9) aufweist, welcher so ausgelegt ist, dass die Induktionsschleife (3) als induktiver Teil eines Resonanzkreises geschaltet ist, und welcher Mittel zur Detektion der durch die Ueberfahrt eines Fahrzeugs über die Induktionsschleife hervorgerufenen Aenderung der Eigenfrequenz des Resonanzkreises aufweist, und an dessen Ausgang ein bei Passieren oder Nichtpassieren der Induktionsschleife durch ein Fahrzeug verschiedenes logisches Signal liegt.

**Claims**

1. Process for measuring the speed of vehicles with a pair of pressure-sensitive detector cables which are let into the road surface at right angles to the direction of travel and which, under the effect of a mechanical impulse, produce signals from which the time taken by the vehicle to travel the distance delimited by the detector cables is determined, characterized in that, on the basis of the signals (I1, I1', 12, 12') triggered as each axle of a vehicle passes over each detector cable (1, 2), the times (T2, T3) taken by the individual axles to travel said distance (D1) are determined and so, given an n-axle vehicle, n intervals are determined and evaluated for speed measurement, that the relative mutual variation of said intervals (T2, T3) is determined and compared to a preset tolerance value, and that the measurement is only evaluated when the variation is not greater than the tolerance value, with determination of the speed being effected with the aid of the intervals, preferably with the aid of their mean value and the distance (D1) between the detector cables (1, 2).

2. Process according to claim 1, characterized in that an induction loop (3) is laid in the road surface (F) in the region of the detector cables (1, 2), preferably in front of the first detector cable (1) in the direction of travel (A), and that the duration (T1) of the change, caused by a vehicle passing the inductance loop, in said loop's inductance in relation to the speed determined for said vehicle is used to determine the length of the vehicle in question.

3. Process according to claim 1 or 2, characterized in that a threshold value (S, Vs) is defined for the pulse-shaped signals (I1. I1', 12, 12') supplied by the detector cables (1, 2), that determination of the intervals (T2, T3) is started and ended when the signals exceed and fall below said threshold value, and that from each of the pulse-shaped signals a significant instant is obtained for the occurrence of the signal and from this a correction value (K1, K2) for the measured interval is obtained.

4. Process according to claim 3, characterized in that, to obtain the significant instant of a pulse (I), the latter's area bisector perpendicular to the time axis (t) is determined and the instant (ts) corresponding to said surface bisector is defined as significant.

5. Process according to claim 4, characterized in that the voltage characteristic of each pulse (I) is scanned, each scanned value (Vn) is used for numerical integration of the voltage characteristic of the pulse and during said integration the associated time value (tn) and the associated integral for each scanned value is stored, and that the area bisector is determined from the total value of the integral at the end of integration.

6. Process according to claim 5, characterized in that the total value of the integral is halved and, from the stored intermediate values of the integral, the value coming closest to the halved total value is determined, and that the time value (tn) corresponding to said intermediate value is used as a significant instant.

7. Apparatus for effecting the process according to claim 1, having two spaced-apart detector cables let into the road surface and having a device for processing the signals produced by the detector cables, characterized in that said device comprises means for determining the interval (T2, T3) taken by each axle of the vehicle to cover the distance (D1) between the detector cables (1, 2), means for determining the relative mutual variation of said intervals, means for comparing said variation to a tolerance value and means for determining the speed with the aid of the intervals, preferably with the aid of their mean value and the distance (D1) between the detector cables (1, 2).

8. Apparatus according to claim 7, characterized by an induction loop (3) laid into the road surface in front of the first detector cable (1) in the direction of travel (A).

9. Apparatus according to claim 8, characterized in that said device for processing the signals is formed by an evaluation circuit and a microprocessor circuit (4 and 5), the evaluation circuit serving as a link between the detectors (1, 2, 3) and the microprocessor circuit and the latter having said means.

10. Apparatus according to claim 9, characterized in that the evaluation circuit (4) has two amplifiers (6, 7), to the input of each of which a detector cable (1, 2) is connected, and that the outputs of the amplifiers are supplied to an analog-to-digital converter (8) with an input multiplexer.

11. Apparatus according to claim 10, characterized in that the evaluation circuit (5) has a loop detector (9), which is so designed that the induction loop (3) operates as an inductive part of a resonant circuit and which has means for detecting the change, caused by a vehicle passing over the induction loop, in the natural frequency of the resonant circuit and at whose output a different logic signal occurs depending on whether the induction loop has or has not been passed by a vehicle.

**Revendications**

1. Procédé de mesure pour la vitesse de véhicules, comprenant une paire de câbles détecteurs réagissant à la pression posés transversalement à la direction de marche ou de course dans la chaussée, qui, sous l'action d'une impulsion mécanique, produisent des signaux à partir desquels on détermine la durée de parcours du véhicule respectif pour le trajet délimité par les câbles détecteurs, caractérisé en ce qu'on définit, à partir des signaux (I1, I1', I2, I2') déclenchés par chaque essieu d'un véhicule lors du passage sur chaque câble détecteur (1, 2), les durées de parcours (T2, T3) des différents essieux du trajet précité (D1) et qu'on détermine ainsi pour un véhicule présentant n-essieux n intervalles de temps et on les exploite pour la mesure de la vitesse, en ce qu'on détermine l'écart mutuel relatif de ces intervalles de temps (T2, T3) et on le compare à une valeur de tolérance prédéfinie, et en ce que la mesure est exploitée seulement lorsque l'écart n'est pas plus grand que la valeur de tolérance, la détermination de la vitesse étant effectuée à l'aide des intervalles de temps, de préférence à l'aide de la valeur moyenne de ceux-ci et de l'écart (D1) entre les câbles détecteurs (1, 2).

2. Procédé selon la revendication 1, caractérisé en ce qu'on pose au voisinage des câbles détecteurs (1, 2), de préférence devant le câble détecteur (1) qui est le premier dans la direction de marche ou de course (A), une boucle d'induction (3) dans la chaussée (F) et en ce qu'on utilise la durée (T1) de la modification produite par un véhicule passant sur la boucle d'induction de l'inductance de celle-ci relativement à la vitesse déterminée pour ce véhicule pour définir la longueur du véhicule concerné.

3. Dispositif selon la revendication 1 ou 2, caractérisé en ce qu'on fixe une valeur de seuil (S, Vs) pour les signaux (I1, I1', I2, I2') en forme d'impulsions fournies par les câbles détecteurs (1, 2), en ce qu'on démarre ou on termine la définition des intervalles de temps (T2, T3) lors du dépassement ou du passage en dessous de cette valeur de seuil, et en ce qu'on obtient à partir de chacun des signaux en forme d'impulsion un instant de temps significatif pour l'apparition du signal respectif et qu'on obtient à partir de celui-ci une valeur de correction (K1, K2) de l'intervalle de temps mesuré.

4. Procédé selon la revendication 3, caractérisé en ce qu'on définit pour l'obtention de l'instant de temps significatif d'une impulsion (I) sa bissectrice de surface perpendiculaire à l'axe de temps (t) et en ce qu'on définit comme significatif l'instant de temps (ts) correspondant à cette bissectrice de surface.

5. Procédé selon la revendication 4, caractérisé en ce qu'on palpe l'allure de tension de chaque impulsion (I), qu'on utilise chaque valeur de palpage (Vn) pour l'intégration numérique de l'allure de tension de l'impulsion et qu'on stocke lors de cette intégration pour chaque valeur de palpage, la valeur de temps (tn) associée et l'intégrale associée, et en ce que la bissectrice de surface est définie à partir de la valeur totale de l'intégrale à la fin de l'intégration.

6. Procédé selon la revendication 5, caractérisé en ce qu'on divise par deux la valeur totale de l'intégrale et qu'on définit à partir des valeurs intermédiaires stockées de l'intégrale la valeur qui est la plus proche de la valeur totale divisée par deux, et en ce que la valeur de temps (tn) correspondant à cette valeur intermédiaire est utilisée comme instant de temps significatif.

7. Dispositif pour la mise en oeuvre du procédé selon la revendication 1, comprenant deux câbles détecteurs posés dans la chaussée à une certaine distance l'un de l'autre et avec une installation de traitement des signaux produits par les câbles détecteurs, caractérisé en ce que l'installation précitée comprend des moyens pour la définition de l'intervalle de temps (T2, T3) requis par chaque essieu du véhicule pour le trajet (D1) entre les câbles détecteurs (1,2), des moyens pour définir l'écart mutuel relatif de ces intervalles de temps, des moyens pour comparer l'écart précité avec un valeur de tolérance et des moyens pour déterminer la vitesse à l'aide des intervalles de temps, de préférence à l'aide des valeurs moyennes de ceux-ci et de l'écart (D1) entre les câbles détecteurs (1, 2).

8. Dispositif selon la revendication 7, caractérisé par une boucle d'induction (3) posée dans la chaussée (F) dans le sens de marche (A) devant le premier câble détecteur (1).

9. Dispositif selon la revendication 8, caractérisé en ce que l'installation précitée de traitement des signaux est constituée par un circuit d'exploitation et un circuit de microprocesseur (4 et 5), le circuit d'exploitation servant d'organe de liaison entre les détecteurs (1, 2, 3) et le circuit

μP, et que ce dernier présente les moyens précités.

10. Dispositif selon la revendication 9, caractérisé en ce que le circuit d'exploitation (4) présente deux amplificateurs (6, 7) aux entrées desquels est raccordé, respectivement, un câble détecteur (1, 2), et en ce que les sorties des amplificateurs sont guidées à un convertisseur A/N 8 présentant un multiplexeur d'entrée.

11. Dispositif selon la revendication 10, caractérisé en ce que le circuit d'exploitation (5) présente un détecteur de boucle (9) qui est conçu de façon que la boucle d'induction (3) soit montée de façon à constituer la partie inductive d'un circuit résonnant et qui présente des moyens pour la détection de la modification provoquée par le passage d'un véhicule sur la boucle d'induction de la fréquence propre du circuit résonnant, et à la sortie duquel se situe un signal logique différent selon le passage ou le non passage d'un véhicule sur la boucle d'induction.

FIG.1

FIG. 2

FIG. 3

FIG. 4

FIG. 5

FIG. 6